(19)

Europäisches
Patentamt
European
Patent Office
Office européen
des brevets

(11) **EP 2 053 379 A1**

(12) **EUROPEAN PATENT APPLICATION**

(43) Date of publication:
29.04.2009 Bulletin 2009/18

(51) Int Cl.:
*G01N 13/16* (2006.01)        *G12B 21/20* (2006.01)
*G01N 33/53* (2006.01)

(21) Application number: 07020819.4

(22) Date of filing: 24.10.2007

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Nambition GmbH
01307 Dresden (DE)**

(72) Inventor: **Puchner, Elias
80636 München (DE)**

(74) Representative: **Samson & Partner
Widenmayerstrasse 5
80538 München (DE)**

(54) **Method and apparatus for analysis of force traces**

(57)    A method of analyzing force trace data, comprises: receiving force trace data, obtained by measuring a sample with a force spectroscopy apparatus, the force trace data having a first and second data component, the first data component representing an extension of a sample of the force spectroscopy apparatus, and the second data component representing a force acting on the sample and causing the extension; and transforming the force trace data into transformed force trace data, comprising a first and second transformed force trace data components, wherein at least one of the first and second transformed force trace data components represents a characteristic of the sample, being independently from at least one of thermal fluctuations, spacer length, bonding strength, the statistic nature of bond ruptures and experimental parameters regarding the measurement of the sample with the force spectroscopy apparatus.

transformation into molecular coordinates

Fig. 1a

Fig. 1b

**Description**

FIELD OF THE INVENTION

In general, the present invention relates to a method and an apparatus for analysis of force traces, in particular force traces measured with a force spectroscopy apparatus, such as an atomic force microscope, glass-needles or with optical or magnetic tweezers.

BACKGROUND OF THE INVENTION

Force spectroscopy, especially atomic force spectroscopy, is generally used to study samples, such as (bio-) molecules, and its characteristics. Such characteristics are, for example, mechanical characteristics, such as size, inner and intra molecular bonding strength, tension forces, folding potentials of molecules, etc.

Force spectroscopy is also used in many different science and technical areas, such as materials science, life science, nano science, etc., to analyze materials, cells, single molecules, binding of ligands or drugs to receptors etc. In recent years, measuring of force traces has become an automatic procedure in atomic force microscopy. Modern atomic force microscopes, for example, are capable to measure automatically force distance (or force extension) traces and also the capture of such traces is done automatically.

However, analyzing of biomolecules (such as DNA, RNA or proteins), for example, requires many repetitions of the measurement procedure, since various problems may arise. For instance, the probe of a cantilever of an atomic force microscope (AFM) may not have contact to the sample, or the measurement starts with a wrong position of the probe on the sample. Additionally, there might be contaminations in the sample and, therefore, force extension traces are taken from "wrong" molecules. These effects might be strong and it is only, for example, one force extension trace out of some thousand useable for further analysis.

Thus, there exists a need for an improved method and apparatus for force trace anal-analysis.

SUMMARY OF THE INVENTION

According to a first aspect of the invention, a method of analyzing force trace data comprises: receiving force trace data, obtained by measuring a sample with a force spectroscopy apparatus, the force trace data having a first and second data component, the first data component representing an extension of a sample of the force spectroscopy apparatus, and the second data component representing a force acting on the sample and causing the extension; and transforming the force trace data into transformed force trace data, comprising a first and second transformed force trace data components, wherein at least one of the first and second transformed force trace data components represents a characteristic of the sample, being independently from at least one of thermal fluctuations, spacer length, bonding strength, the statistic nature of bond ruptures and experimental parameters regarding the measurement of the sample with the force spectroscopy apparatus.

According to a second aspect of the invention an apparatus for analyzing force trace data, obtained from measuring a sample with a force spectroscopy apparatus, comprises: an interface section being adapted to receive force trace data having a first and second data component, the first data component representing an extension of a sample of the force spectroscopy apparatus, and the second data component representing a force acting on the sample and causing the extension; and a transformer section, coupled to the interface section, being adapted to transform the received force trace data into transformed force trace data, comprising a first and second transformed force trace data components, wherein at least one of the first and second transformed force trace data components represents a characteristic of the sample, being independently from at least one of thermal fluctuations, spacer length, bonding strength, the statistic nature of bond ruptures and experimental parameters regarding the measurement of the sample with the force spectroscopy appartus.

According to a third aspect of the invention, a force spectroscopy apparatus comprises an apparatus according to the second aspect of the invention.

According to a fourth aspect of the invention, an analyzing system comprises: a force spectroscopy apparatus; an analyzing apparatus according to the second aspect of the invention; a storage including a database; and a network connecting the force spectroscopy apparatus, the analyzing apparatus and the storage; wherein the force spectroscopy apparatus is adapted to automatically measure a sample and to send resulting force trace data to the analyzing apparatus; and the analyzing apparatus is adapted to detect a characteristic property in the transformed force trace data and to compare the detected characteristic property with characteristic properties stored in the database to automatically determine the type of the measured sample.

According to a fifth aspect of the invention, a computer program comprises instructions causing a processor based system to perform the method according to the first aspect of the invention.

Further aspects and features of the invention are set forth in the dependent claims, the following description of preferred embodiments and in the accompanying drawings

BRIEF DESCRIPTION OF THE DRAWINGS

Embodiments of the present invention are explained by way of example with respect to the accompanying drawings, in which:

Fig. 1a illustrates a force extension trace, as measured for example in atomic force spectroscopy;

Fig. 1b illustrates the force extension trace of fig. 1a after applying a transformation in accordance with an embodiment of the invention;

Fig. 1c illustrates two force extension traces, as measured for example in atomic force spectroscopy;

Fig. 1d illustrates the two force extension traces of fig. 1c after applying a transformation in accordance with an embodiment of the invention;

Fig. 2a illustrates another force extension trace;

Fig. 2b illustrates the force extension trace of fig. 2a after applying a transformation in accordance with an embodiment of the invention;

Fig. 2c illustrates the contour length histogram of the fig. 2b;

Figs. 3a and 3b illustrate force extension traces and contour length histograms in accordance with an embodiment of the invention;

Fig. 4a shows the superposition of 13 force extension trace of a measurement of a sample including bacteriorhodopsin;

Fig. 4b shows a force contour length histogram of the force extension data of fig. 4a in accordance with an embodiment of the invention;

Fig. 4c shows a contour length histogram of the force contour length data of fig. 4b in accordance with an embodiment of the invention;

Fig. 5a shows a cross superposition histogram in accordance with an embodiment of the invention;

Fig. 5b shows a cross superposition histogram in accordance with an embodiment of the invention;

Fig. 6a shows a cross superposition histogram in accordance with an embodiment of the invention;

Fig. 6b shows a cross superposition histogram in accordance with an embodiment of the invention;

Fig. 7a illustrates a calculation of an autocorrelation function in accordance with an embodiment of the invention;

Fig. 7b illustrates a calculation of an autocorrelation function in accordance with an embodiment of the invention;

Fig. 8a illustrates a calculation of a crosscorrelation function in accordance with an embodiment of the invention;

Fig. 8b illustrates a calculation of a crosscorrelation function in accordance with an embodiment of the invention;

Fig. 9 show a flow diagram of an embodiment of the invention;

Fig. 10 show a flow diagram of an embodiment of the invention; and

Fig. 11 illustrates an embodiment of an apparatus in accordance with the invention.

DETAILED DESCRIPTION OF PREFERRED EMBODIMENTS

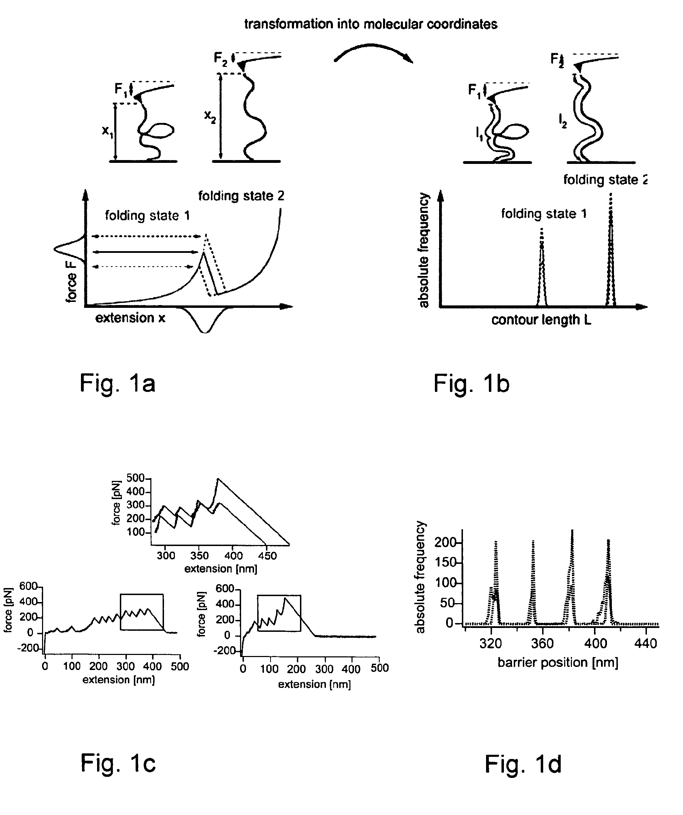

Figs. 1 a to 1 d illustrate an embodiment of the present invention. Before a detailed description of the preferred embodiments, general explanations are made.

In some embodiments samples are investigated, such as molecules, fluids, cells, etc. Molecules, such as DNA, RNA or proteins, called biomolecules hereinafter, are polymers which self-assemble in a more or less compact manner. Their function is determined by their structure and their dynamics. Since the folding potential determines both structure and dynamics, in some embodiments, for example, the energy landscape of biomolecules is determined, in order to understand i.a. their function. Molecular processes of biological relevance are adapted to energies close to kT (k is the Boltzmann constant, and T the temperature). Thermal excitations drive the dynamics of processes and cause fluctuations. In some embodiments, experimental data of individual biomolecules, which are subjected to large fluctuations, are compared with theoretical predictions and/or previous or other measurements.

In some embodiments, the barriers in the energy landscape are determined by means of force extension traces. The force extension traces are obtained, for example, by measuring the force acting on a sample and the resulting extension of the sample, whereby the extension of the sample is measured by subtracting the deflection of a cantilever from the distance of its mounting to the surface in atomic force spectroscopy. The cantilever's probe is, for example, retracted during one cycle of one force trace measurement. In some embodiments, for example, as force spectroscopy apparatus an atomic force microscope (AFM), optical traps or magnetic tweezers is used to collect force extension traces and corresponding force trace data. Usually, in scanning probe microscopy a cantilever having a probe is used for analyzing samples, as mentioned above. The sample is measured or probed with the cantilever's probe and the deflection of the elastic cantilever are measured.

In some embodiments, the unfolded part of the molecule gets stretched in the beginning of a retraction cycle. As illustrated in fig. 1a, its elastic response causes a rise in force with increasing extension. In the beginning the biomolecule is in a folding state 1 and has a first contour length L. With increasing extension, for example caused with a probe acting with a force on the biomolecule, the biomolecule is stretched until the folding potential is overcome and the biomolecule changes into folding state 2. In folding state 2, the biomolecule has another, longer contour length than in folding state 1, as can be seen from fig. 1a.

There exists a variety of models to describe such a force extension behavior. The most prominent ones are the worm-like chain (WLC), the freely jointed chain (FJC), the freely rotating chain (FCR) and modifications that take into account the backbone elasticity at high forces.

There also exist several models that describe how the energy barriers of the folding potential are overcome under an external force. In some embodiments a simple model is used: since the force increases continuously with increasing extension, the energy landscape gets tilted more and more until the barrier is overcome by thermal fluctuations. Both the force and the extension are thus subjected to fluctuations and depend on the timescale of the measurement, in particular on the force and on the loading rate. This is illustrated by means of the distributions on the left side of fig. 1a. The new folding state of the molecule is associated with a sudden increase of the length of the biomolecule, more precisely of the contour length of the biomolecule. As a consequence the force drops and exhibits the elastic response of the completely unfolded part of the molecule upon further increasing extension (folding state 2 in fig. 1 a).

The rupture forces can be directly determined from force extension traces. In some embodiments the positions of energy barriers are determined by fitting such force extension traces with models for polymer elasticity. However, in some embodiments, the extension is an inappropriate variable for the characterization of the molecular energy landscape, since it depends on fluctuations and on external experimental parameters, such as the loading rate, the temperature or properties of the solution. Additionaiiy, the extension and the rupture forces are subject to a statistical process. Therefore, the extension as well as the force at which the folding potential is overcome, are both different from measurement to measurement. That means, even for (bio-)molecules of the same type the force traces will differ. The variation of external parameters, such as pulling velocity, temperature, pH-value, salt content and/or polarity of the solvent (solution), might even have a stronger influence to trace forces. Also the bond itself may vary due to, for example, mutations in proteins. Exemplary, this is shown in fig. 1c, wherein two force extension traces for two molecules of the same type are shown on the lower left and right side, respectively. The comparison of corresponding parts of the force extension traces leads to the plot as shown in fig. 1c upper middle. It can be clearly seen that the variation of the above-mentioned parameters leads to force extension traces with different shape, though they were in agreement in absence of the parameter's variations. Thus, in some embodiments the force traces do not show a unique pattern, which would be appropriate to characterize and classify the measured molecules.

Thus, in some embodiments, a variable transformation from extension to a parameter being independently from such fluctuations and/or on the above given experimental parameters, is performed. Examples for such independent parameters are the contour length and/or the persistence length.

In some embodiments, the contour length is an appropriate variable, since it is independent of fluctuation and altering external parameters. It directly reflects the folding state of the molecule (see fig. 1b). In fig. 1a and 1b is shown exemplary a transformation of force spectroscopy data from extension space into contour length space. Fig. 1 a illustrates an exemplary AFM (atomic force microscope) experiment. During retraction of the cantilever, the force and the extension are recorded. In the beginning, the unfolded part of the molecule gets stretched and the force rises until the energy barrier can be overcome by thermal fluctuations. Further stretching results again in a rise of force. The rupture force and position differs from trace to trace due to fluctuations and may change upon altered experimental conditions, as mentioned above. The transformation of each data point from extension- to contour length space and the accumulation in a histogram is shown on the right side (fig. 1b). The representation with respect to this molecular coordinate does not exhibit the variances of the extension, but directly characterizes the energy barriers of the folding potential. Details which are lost in some embodiments due to fitting the measured force trace are thus conserved in some embodiments by performing the above-mentioned transformation of force trace data into transformed force trace data.

The transformed force trace data are independent from fluctuations, etc., as already explained above. However, this independency from fluctuations, etc., has not to be understood strictly in the embodiments. With independency is meant that due the transformation, e.g. different rupture forces will not have an influence on the position of the contour length value in the contour length histogram (see, e.g. fig. 1b). The mean position of the two contour length peaks in fig. 1b is not changed due to differing rupture forces. Alterations of experimental parameters and altering rupture forces, etc., would have an influence on the height and maybe on the width of the contour length peak. However, when fitting this peak, for example with a Gaussian, it is possible to determine the peak with a high accuracy. Thus, for transformed force traces of the same molecule type the contour length peaks will be at the same position with a high accuracy. Instead, when comparing the original force traces, it will be highly difficult to see the same or similar patterns in the force traces due to the above-mentioned fluctuations, etc. Thus, it is not easy to compare such force traces and an automatic comparison is difficult. Mostly, such a comparison is done by "hand", i.e. a highly educated user has to look at each single force trace, whether it is useable or not.

Knowing the monomer length, this new coordinate can be scaled to the number of polymer units in order to localize the energy barriers in some embodiments. Besides its physical meaning, this new representation of force spectroscopy data, i.e. the transformation of force trace data into transformed force trace data being independently of fluctuations, exhibits other advantages. In some embodiments, for example, a histogram of the transformed force trace data, such as a contour length histogram, directly reflects the energy barriers. All details along the unfolding pathway are preserved with high resolution. Also the contour length is independent of fluctuations and external experimental parameters. This allows the comparison of different traces, the automated recognition of a specific molecular pattern and a reasonable averaging of traces in some embodiments, as explained in detail below. Such a comparison can also be seen in fig. 1d showing the transformed force extension traces from fig. 1c. Due to the transformation the difficulties arising when comparing force extension traces, as shown in fig. 1c, disappear after transformation, as can be seen from fig. 1 d. The contour lengths or barrier positions, respectively, as shown in fig. 1d for the two force extension traces of fig. 1d after applying the transformation show clearly the same characteristics despite the very different shapes of the force extension traces of fig. 1c.

In some embodiments, the transformation of force extension traces can be performed with a variety of models for polymer elasticity. There exist several models to describe the elastic response of unfolded biopolymers which allow the analysis of force extension traces. By solving these relations, for example, for the contour length, the transformation function is obtained, with which the transformation from the extension space to the contour length space is performed. In the following, this principle is explained more mathematically and examples for models are given for which the transformation functions have been deduced. Of course, any other appropriate model may be used.

The function describing the force extension behavior is denoted $F(x, L, ...)$. The force $F$ depends on the extension $x$, on the contour length $L$ and on other parameters that are fixed. In some embodiments, each data point from extension space $[F_i, x_i]$ is transformed into the contour length space $[F_i, L_i]$. Using the right restrictions $L, x, F > 0$, $x < L$, all models for polymer elasticity are one-to-one mappings. This means that only one defined force value $F_i$ exists for a given point $[x_i, L_i]$. Therefore, the model can be solved for the desired parameter $L$. By means of the obtained function $L(F, x, ...)$ each data point can by transformed into contour length space:

$$[F_i, x_i] \mapsto [F_i, L_i(F_i, x_i)].$$

One of the most common models is the worm-like chain model (WLC) introduced by Bustamante et al. (Bustamante, C., J.F. Marko, E.D. Siggia, and S. Smith. 1994, Entropic elasticity of lambda-phage DNA. Science 265 (5178), 1599-1600).

$$F(x,L) = \frac{k_B T}{p}\left(\frac{1}{4(1-x/L)^2} + \frac{x}{L} - \frac{1}{4}\right) \tag{1}$$

$k_B$: Boltzman constant, p: persistence length, L: contour length, T: temperature

In a first approximation the persistence length p is fixed and does not appear as a variable. Solving this model for the contour length L results in the transformation function $L_{WLC}(F,x,p)$.

However, the persistence length is not constant and has to be adjusted to different force regimes. Therefore, modifications of this model like the QM-WLC have been developed, which account for the backbone elasticity of the polymer and allow for more accurate fits in the high force regime. The result of the quantum-mechanical ab initio calculation was approximated by the following polynomial representation

$$F = \gamma_1\left(\frac{L}{L_0} - 1\right)^1 + \gamma_2\left(\frac{L}{L_0} - 1\right)^2 \tag{2}$$

and the elastic parameters of this expansion were determined. For peptides, for example, is $\gamma_1$ = 27.4 nN and $\gamma_2$ = 109.8 nN. In order to take into account the force dependency of the contour length, the transformation is done in two steps in some embodiments. First, the data is transformed with the WLC model: $L_{WLC}(F, x, p)$. In the second step, the force independent contour length at zero force is determined by solving the expansion (2) for $L_0$ and inserting $L_{WLC}$ and F: Lo = $L_0(L_{WLC}, F)$.

A third model that is used exemplary, is the freely rotating chain model (FRC). It considers bonds of the length b, which are connected by a fixed angle $\gamma$. However, its torsional angles are not restricted. A detailed discussion of the stretching behavior is given, for example, in Livadar, L. , R.R. Netz, and H.J. Kreuzer. 2003. Stretching Response of Discrete Semiflexible Polymers. Macromolecules 36(10): 3732-3714, which can be summarized as follows.

In the infinite-chain limit, the Kuhn length a is given by $a = b\dfrac{1 + \cos\gamma}{(1 - \cos\gamma)\cos(\gamma/2)}$ and the persistence

length p of the FRC equals $p = b\dfrac{\cos(\gamma/2)}{|\ln(\cos\gamma)|}$ . The force extension behavior exhibits three different scaling ranges and is given by

$$\frac{x}{L} \cong \begin{cases} \dfrac{fa}{3k_B T} & \text{for} & \dfrac{fb}{k_B T} < \dfrac{b}{p} \\[3mm] 1 - \left(\dfrac{fp}{4k_B T}\right)^{-1/2} & \text{for} & \dfrac{b}{p} < \dfrac{fb}{k_B T} < \dfrac{p}{b} \\[3mm] 1 - \left(\dfrac{fb}{ck_B T}\right)^{-1} & \text{for} & \dfrac{p}{b} < \dfrac{fb}{k_B T} \end{cases}.$$

Again, the transformation function is obtained by solving for L.

Once a force-extension trace is transformed, all points above a force threshold are accumulated, for example, in some embodiments in the energy barrier position histogram.

In some embodiments, a method of analyzing force trace data is performed, wherein force trace data are analyzed, which have been obtained by measuring a sample with a force spectroscopy apparatus, such as an atomic force microscope, glass-needles, optical/magnetical tweezers, or a similar apparatus being capable to measure force traces. Such force trace data may be taken in some embodiments by measuring a sample with a cantilever's probe and measuring respective forces and distances or extensions of the sample. A sample usually includes more than one molecule or biomolecule, and thus, the force trace data may represent a variety of force traces. Additionally, samples may comprise different types of biomolecules, and thus, the force trace data may reflect the composition of the sample. The force trace data may also represent only one force trace, a part of a force trace or any mixture of different force traces. In some embodiments, the force trace data have a first and second data component, the first data component representing an extension of a sample of the atomic force microscope, and the second data component representing a force acting on the sample and causing the extension. The second data component only represents the force, and can, thus, also expressed, for example, as an experimental parameter, e.g. voltage of a photo diode, deviation of an optical trap, fluorescence of magnetic tweezers, etc. The same holds also for the extension, which is represented by the first data component. Also the extension must not be measured directly, but can also be represented by an experimental parameter. The force trace data are transformed into transformed force trace data in some embodiments. The transformed force trace data comprise a first and second transformed force trace data components, wherein at least one of the first and second transformed force trace data components represents a characteristic of the sample, being independently from at least one of thermal fluctuations, spacer length, bonding strength, the statistic nature of bond ruptures and experimental parameters regarding the measurement of the sample, such as temperature, pulling speed or properties of the solvent, measured with the force spectroscopy apparatus. Such a characteristic of the sample, e.g. a molecule or biomolecule, is a contour length, or persistence length or any other characteristic being independent of thermal fluctuations, etc. The contour length may also be expressed indirectly by other parameters, for example, by the monomer length, or any other parameter representing a length of at least a part of a molecule. As mentioned above, the temperature and/or thermal fluctuations result in different rupture forces of the measured sample, i.e. the investigated molecule or biomolecule, and thus they result in different patterns of force traces. Also the statistic nature of bond ruptures influences the shape of the force extension traces. The statistic nature of the bond rupture results from the Brownian motion. The spacer length is, for example, the distance from the end of a molecule to the point where the probe touches the molecule at the beginning of a force trace measurement and starts to investigate or to measure the molecule. The spacer length may vary for different force traces, and thus, the force trace data may be influenced by the different spacer lengths, i.e. "offsets" of the probe on the molecule. Additionally, due to the different locations where the probe starts to extend the biomolecule in some embodiments, also the slope of different force traces will vary. For different bonding strengths for different biomolecules not only the slope will vary, but also the rupture points.

The transformation is in some embodiments a one-to-one mapping of the force trace data, being in the force-extension space, into the transformed force trace data, being in the force-contour length-space. In some embodiments the sample comprises polymers and the transformation is based on at least one model using polymer elasticity. Such models using polymer elasticity are, for example, the worm like chain model, freely jointed chain model, and freely rotating chain model. However, this is only an exemplary list of models - each model which is capable to describe polymer elasticity may be used. The mathematic description for such models has already been described above.

After the transformation of force trace data into transformed force trace data being independent of fluctuations, etc., as mentioned above, the transformed force trace data may be used for further analysis. In some embodiments, the transformed force trace data are used to detect characteristic properties, such as patterns which represent rupture points, different contour lengths, energy barriers (folding potentials), or other characteristics of the investigated sample. For detection of such a characteristic property, such as patterns in the force trace data or in the transformed force trace data, respectively, a first and a second transformed force trace data set are compared in some embodiments. The first and second transformed force trace data set may be the same - in such a case, for example, an autocorrelation function of a measured force trace being represented by the transformed force trace data is calculated. The autocorrelation function may be used to determine the quality of a measured force trace, represented by the force trace data and, thus, by the transformed force trace data. For example, the distances of maxima in histograms of the transformed force trace data may be correlated. In other cases, the detection of a pattern comprises calculating a cross correlation between the first and the second transformed force trace data set, which represent different force traces. The correlation between the first and second transformed force trace data set may be used to determine, for example, whether the first transformed force trace data is similar to the second force trace data set. The second transformed force trace data set could be, for example, a known default force trace data set with a known pattern. Thus, in this way force trace data sets can be analyzed. Of course, any other suitable way for comparing the first and second transformed force trace data sets may be used. For instance, the pattern in the data sets may be described by or fitted with a polynomial function or a Gaussian, or any model, which is suitable to describe the pattern in the force trace data sets. Such fitting and analyzing of the transformed force trace data may be done, for example, with an object-oriented data analysis framework, called ROOT, which is available from http://root.cern.ch/. In some embodiments the force trace data and/or transformed force trace data are rejected, based on a property of the transformed force trace data, e.g. by determining, whether a first and/or a second component of the transformed force trace data exceeds a threshold value. For example, a force component of the transformed force trace data may exceed a force threshold value which may represent a noise level. In some embodiments an evaluation value may be calculated, which represents the quality of agreement between a detected and a default characteristic or pattern included in the first and second (transformed) force extension data sets representing at least parts of force extension traces. The evaluation value may also represent the quality of the force extension trace or the transformed force extension data sets itself, for example when derived from an autocorrelation function. The default characteristic property (or pattern) may represent known characteristics of samples, such as biomolecules, or measured characteristics from a previous measurement.

In some embodiments, the herein described methods are performed, for example, on a processor-based system, and thus, in such embodiments corresponding instructions may be stored in the processor-based system to perform the method(s). In some embodiments, the herein described methods are implemented, for example, as a computer program on a processor-based system, and thus, in such embodiments the computer program includes instructions, which cause a processor-based system to perform the herein described method(s).

In some embodiments an apparatus for analyzing force trace data is used (which is also called analyzing apparatus in the following). The force trace data are obtained from measuring a sample with a force spectroscopy apparatus, such as an atomic force microscope, or any other suitable device, as explained above. In some embodiments the analyzing apparatus comprises an interface section being adapted to receive force trace data having a first and second data component, the first data component representing an extension of a sample of the force spectroscopy apparatus, and the second data component representing a force acting on the sample and causing the extension. A transformer section included in the analyzing apparatus, which is coupled to the interface section, is adapted to transform the received force trace data into transformed force trace data. Also the transformed force trace data comprise a first and second transformed force trace data components, wherein at least one of the first and second transformed force trace data components represents a characteristic of the sample, being independently form at least one of thermal fluctuations, spacer length, bonding strength, and experimental parameters regarding the measurement of the sample with the force spectroscopy apparatus, such as temperature, pulling speed, properties of the solvent, or the like. The first or second transformed force trace data component may represent a contour length of a molecule or biomolecule of the sample. In some embodiments, the transformer section is also adapted to perform a transformation, which is a one-to-one mapping of the force trace data being in the force-extension space into the transformed force trace data being in the force-contour length-space. In some embodiments, the transformer section is adapted to perform a transformation, based on at least one model using polymer elasticity, wherein the such a model could be based on, for example, at least one of: worm like chain model, freely jointed chain model, and freely rotating chain model. The mathematical representations of these models have already been discussed above. In some embodiments, the analyzing apparatus further comprises a detector section being adapted to detect a pattern in the transformed force trace data by comparing a first and a second transformed force trace data set and also to calculate an autocorrelation and/or cross correlation function of the first and/or second transformed force trace data set. In some embodiments, the analyzing apparatus is coupled to a storage including a database, which includes a set of default characteristic properties or patterns representing sample characteristics. In some embodiments the analyzing apparatus comprises the storage with the database. In other embodiments, the database is a remotely stored in a remote storage and the interface section of the analyzing apparatus may be adapted to connect the apparatus with the remote database. The remote storage with the remote database may be located in a remote server, for example. By connecting the analyzing apparatus with the database, the analyzing apparatus may be adapted to compare the transformed force trace data and the included characteristic properties, including, e.g. pattern(s), with the default characteristic properties or patterns stored in the database. Additionally, the analyzing apparatus may be adapted to send a detected pattern (and/or the transformed force trace data) to the database for storage in the database. In this way the database is updated with (new) detected patterns. Additionally, other detected parameters being characteristic for the investigated sampled, which is the origin for the transformed force trace data, may be transmitted to the database. Such parameter may be, for example, the contour length and/or persistence length. In some embodiments, the detector section is adapted to calculate an evaluation value representing the quality of agreement between a detected characteristic property or pattern and a default characteristic property or pattern, as already mentioned above.

In some embodiments, a force spectroscopy apparatus, such as an atomic force microscope, glass-needles and/or optical/or magnetic tweezers, comprises an analyzing apparatus, as mentioned above, and/or is capable to perform the above described method(s). In some embodiments, the force spectroscopy apparatus comprises a controller being adapted to control the measurement of a sample. The controller is further adapted to control the measurement of the sample based on the evaluation value, as explained above. The controller may, for example, control the position of a probe of the atomic force spectroscopy apparatus, a temperature (e.g. of the sample), the salt content or other properties of the solution (solvent) of the sample, the position of the sample, the pulling speed, etc. Thus, in some embodiments, the controller may control any experimental parameter, which may influence the measurement of a force extension trace, based on the evaluation value.

In some embodiments, an analyzing system for automatically analyzing force trace data comprises a force spectroscopy apparatus, such as an atomic force microscope, glass-needles and/or optical/or magnetic tweezers , an analyzing apparatus, a storage including a database, and a network connecting the force spectroscopy apparatus, the analyzing apparatus and the storage. The analyzing apparatus is adapted to automatically detect a characteristic property, such as patterns, in the (transformed) force trace data received from the atomic force microscope. The automatic pattern detection, for example, is performed including the transformation and pattern recognition as described herein. The network may be a LAN or WLAN and may use the TCP/IP protocol or any other protocol for transmission of data. The atomic force microscope is adapted to automatically measure a sample and to send resulting force trace data to the analyzing apparatus. The analyzing apparatus is also adapted to compare the detected characteristic properties or patterns with characteristic properties or patterns stored in the database to automatically determine the type of the measured sample.

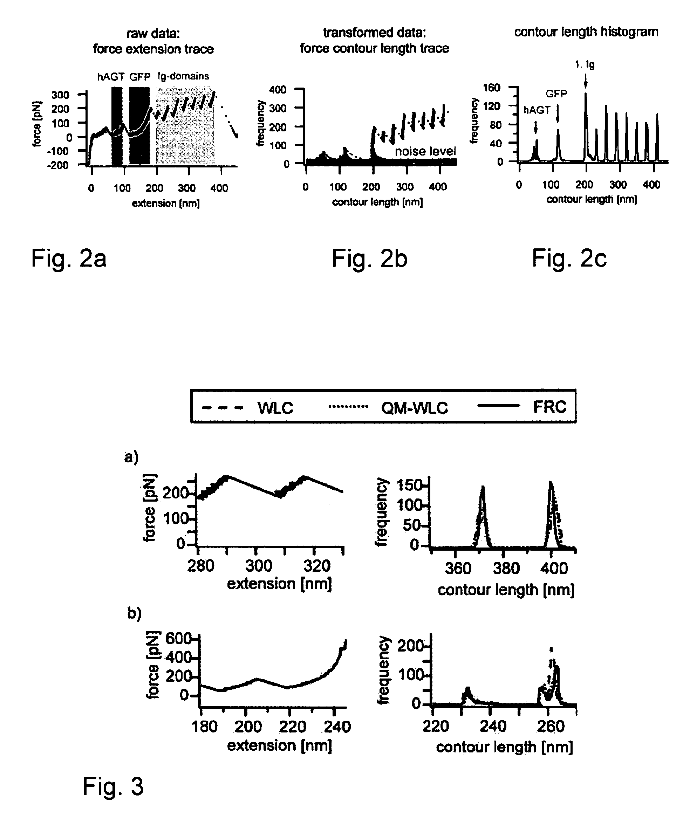

Returning to figs. 2a-c, there is shown an embodiment of the invention and the application of the above-given methods to AFM data of different proteins, i.e. to force trace data. Matter of investigation is a protein construct of the green fluorescent (Ig-GFP), and a protein construct of the muscle enzyme titin kinase (Ig-TK).

In the in figs. 2a-c shown embodiment, the unfolding of an Ig-GFP fusion protein is analyzed by means of its contour length histogram. A typical force vs. extension trace is shown in fig. 2a as a histogram representation of the measured force trace data. Such a force extension trace is measured, for example, with a known AFM. The regular saw-tooth pattern at high extensions is caused by Ig-domain unfolding and serves as a fingerprint for the selection of traces. Since the protein construct consists of four Ig-domains on the N-Terminus of the GFP and four on the other side, each unfolding trace, which shows more than four Ig domains must contain the unfolding of GFP. The GFP part corresponds to the folding state 1, as shown in fig. 1, and agrees with the finding of a contour length increment of 78 nm. After the rupture of the first β-sheet, GFP is not stable anymore and its unfolded polypeptide backbone shows the typical elastic response. The peak at the beginning is presumably due to the unfolding of hAGT.

Fig. 2b shows an embodiment of a transformation of the force versus extension trace with the WLC model using a persistence length of 0.4 nm. At low forces, the thermal excitation of a cantilever of an atomic force microscope causes a large noise in the contour length space. Therefore only points with forces above a force threshold of 10 pN were collected in the contour length histogram in this embodiment. The contour length coordinate does not depend any more on fluctuations or altering experimental parameters, but directly reflects the molecular folding states and its energy barriers (se fig. 2c). This histogram is therefore in the following called barrier position histogram. Here, the barrier position is measured along the unfolded protein. The first two barriers correspond presumably to the unfolding of hAGT. Once the rupture of the first GFP β-sheet occurs, the protein is not stable anymore and its unfolded part contributes to the total contour length. Therefore, all points recorded after the bond rupture appear at a new contour length position that is characteristic for the new folding state of the protein. The same holds for the unfolding of the Ig-domains: after each rupture, the protein construct is in a new folding state and each point appears at the corresponding contour length. For the GFP unfolding a peak to peak distance of $80 \pm 0.5$ nm is measured. The Ig-domain unfolding shows an increase in contour length of $29 \pm 0.5$ nm.

In the following, different models of polymer elasticity with respect to the quality of the obtained contour length histograms are compared, which can be used in the embodiments. The usual WLC-model does not account for backbone elasticity at high forces. Therefore an ab initio based modification (QM-WLC) was introduced, which describes the elasticity above 200 pN significantly better. As a third model, the FRC model is used that treats molecules as bonds of fixed length b, which are connected by fixed angles γ but arbitrary torsional angles.

Fig. 3 shows the comparison of these three models. In a) a part of a force extension trace is transformed and the obtained histograms are shifted with respect to each other in order to separate the peaks. It can be seen that the peaks of the QM-WLC model are higher and slightly thinner than the ones obtained by the usual WLC (p=0.4 nm in both cases) in this embodiment. This indicates that the QM-WLC describes the data more accurate. However, the best result is achieved with the FRC model (γ=22°, b=0.4 nm) in this embodiment. The full width at half maximum (FWHM) of the different models is compared in table 1. Fig. 3b) shows the section of a trace with forces up to 600 pN. At these high forces, the WLC model is not able any more to resolve small sub steps. In contrast both, the QM-WLC and the FRC, resolve the two folding states, which are separated by 5nm.

**Table 1**: Comparison of the three above-mentioned transformation models. The full widths at half maximum of the two peaks of Fig. 3 a) show that the FRC - transformation results in the sharpest peaks.

| Peak number | 1 | 2 |
|---|---|---|
| FWHM: WLC | 4.7 nm | 4.0 nm |
| FWHM: QM-WLC | 3.8 nm | 3.2 nm |
| FWHM: FRC | 2.3 nm | 2.4 nm |

These results show that in some embodiments sharp peaks and a high resolution is achieved using an appropriate model and suitable parameters for the transformation.

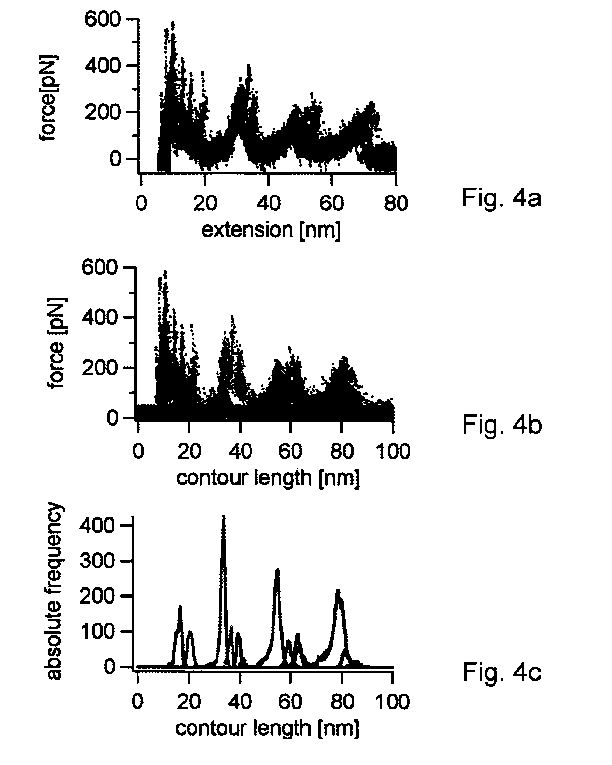

Small energy barriers of the unfolding potential are not resolved in each trace in some embodiments. In order to extract its details, several traces could be necessary. However, the dependency of the rupture position on fluctuations prevents reasonable averaging of force extension traces. In the contour length space, however, traces can be averaged due to the independence of fluctuations. Matter of investigation in this embodiment is the well studied membrane protein bacteriorhodopsin (BR). In fig. 4a thirteen traces of BR, unfolded from the cytoplasmic side of the membrane, are superpositioned. As mentioned above, averaging is not possible in this representation since the coordinate is subjected to fluctuations. The transformation into contour length space was done in this embodiment with the WLC model and a persistence length of 0.4 nm (fig. 4b). Because of the high spring constant of the cantilevers used (90pN/nm) in the AFM, the force threshold for the contour length histograms was set to 60 pN. The averaged barrier position histogram shown in fig. 4c was obtained by averaging each corresponding peak of the thirteen contour length histograms. By fitting with Gaussians, the precise positions of energy barriers were determined. A comparison of these values to the ones obtained by fitting the force extension traces with the WLC is shown in Table 2. The mean deviation equals 0.3 nm and the maximum deviation of 1 nm is still within the error of the WLC fit.

**Table 2**: Comparison of barrier positions in the unfolding potential of BR. The upper row shows the values obtained from the averaged energy barrier position histogram of fig. 4 by fitting the peaks with Gaussians. These values agree well with the ones obtained by fitting the force-extension traces with the WLC.

| histogram $\pm$ 0.5 nm | 16.2 | 20.6 | 33.6 | 36.3 | 39.4 | 41.3 | 54.7 | 59.2 | 62.9 | 63.5 | 78.7 | 81.3 | 84.9 |
|---|---|---|---|---|---|---|---|---|---|---|---|---|---|
| WLC-fitting $\pm$ 1.1 nm | 16.2 | 20.0 | 33.6 | 36.1 | 39.4 | 40.7 | 54.9 | 59.0 | 62.6 | 64.5 | 79.2 | 81.6 | 85.1 |

As can be seen, the average in contour length space preserves the details of the energy landscape in some embodiments, because of the fluctuation independence of individuals in this representation. Contour length histograms reveal the barriers of the molecular energy landscape. Because of its high dimensionality, several complex pathways between two given states may exist. Their knowledge allows for conclusions about the architecture of a protein. For instance, let's assume two energy barriers that have the same probability to be overcome. If their order along the unfolding pathway is always the same, they depend on each other. One can conclude that the force first acts on the first bond and after its rupture on the second one, which was shielded before. For proteins, which are unfolded in solution, this means that the positions along the polypeptide chain forming the second bond, must be between the positions forming the first one.

In the following, an embodiment for the experimental determination and visualization of unfolding pathways by means of the cross superposition of 2D histograms is described. First, the n entries $h1_i$, i=1 ... n of the first histogram h1 are assigned to the n columns of each row of a n x n Matrix $M1_{ki}$: $M1_{ki} = h1_i$, k, i = 1 ... n. Graphically represented, energy barriers appear as stripes. The second n x n matrix M2 is created by assigning the n entries $h2_i$ of the second histogram h2 to the n rows of each column of M2: $M2_{ki} = h2_k$, k, i = 1 ... n. In the graphical representation the stripes are rotated by 90°. Addition of the two matrices results in the n x n superposition matrix S, S = M1+M2. In its pattern, each part of the first histogram interferes with each part of the second one.

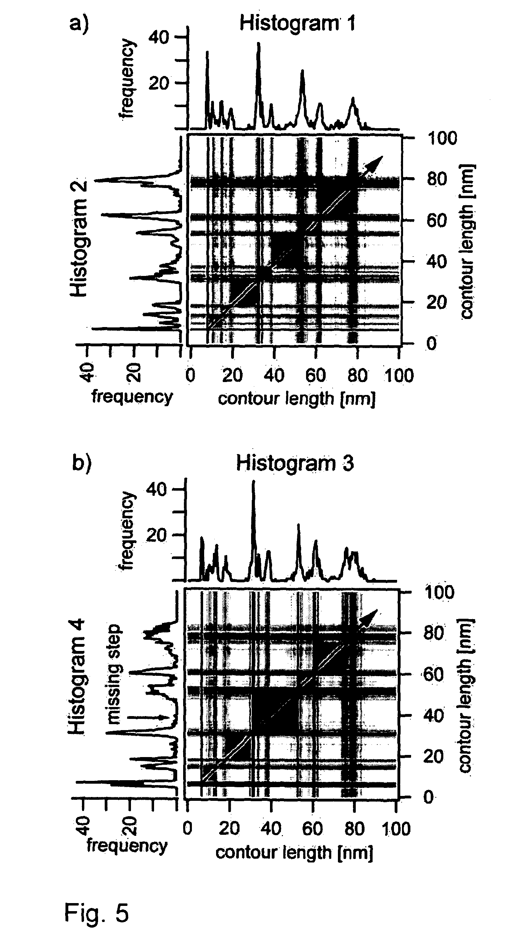

An example of an embodiment of this method is shown in fig. 5. Fig. 5 shows two cross superpositions of four different histograms that are obtained from bacteriorhodopsin force extension traces. The way to read the pattern in fig. 5 is the following: First the smallest squares, formed by matching contour length increments, have to be determined. If subsequent squares are aligned in the diagonal with positive slope, they occur in the same order in both traces. If the diagonal has negative slope, the order is permutated. The same holds for squares, which consist of multiple small squares. In the cross-superposition of fig. 5 a), the matching parts of the two histograms are marked with colored (grey) squares. To give a better overview, several of the smaller sub-steps are combined. Since the squares are aligned along the diagonal with positive slope, one can conclude that those unfolding events occur in the same order. If not all energy barriers are resolved in each trace, the cross-superposition pattern cannot be filled with smallest squares. This case is shown in fig. 5 b). The unfolding steps, which lie down left und up right adjacent to the big square located in the center on the diagonal, fit together and have the same size and sequence as in a). But, since there is a step not visible in histogram 1, the two corresponding steps of histogram 3 have to be combined in order to obtain the smallest square that fits. This results in the square in the center aligned along the diagonal with positive slope. The observation that bacteriorhodopsin always unfolds along the same pathway holds for the set of thirteen traces. It supports that during the unfolding process, one helix after the other is pulled out of the membrane in some embodiments.

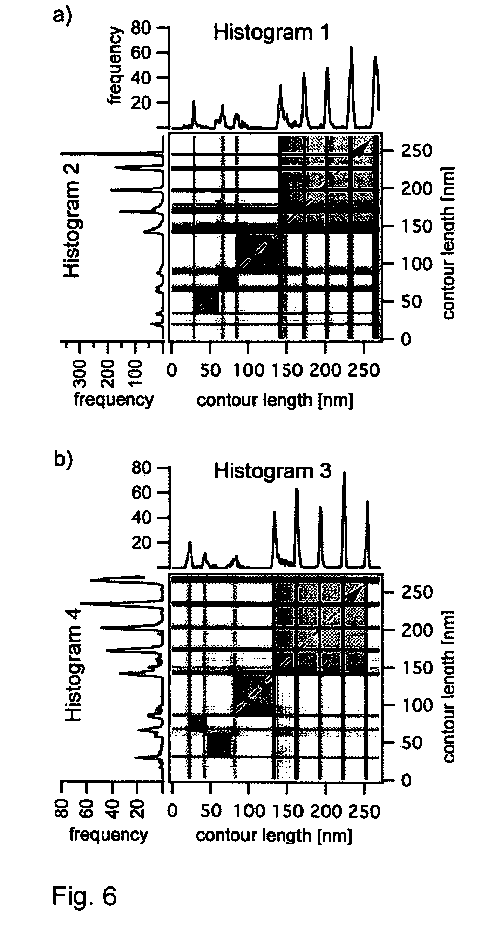

Fig. 6 shows the cross-superpositions of contour length histograms that are obtained by an embodiment, wherein the force extension traces are transformed with the QM-WLC model (p=0.6 nm). The four even increments of about 29 nm, which are shown by the big square in the upper right in the histogram, are due to the unfolding of four Ig/Fn-domains. Since the folded protein construct is contacted at random positions, it may occur that the beginning of a histogram exhibits besides unspecific interactions the rupture of Ig-domain fragments. This part can be separated from the titinkinase unfolding by choosing the rupture of the first Ig-domain as the point of reference. Searching backwards for matching increments results in the other squares, not located in the upper right of the histogram, and that have in total a contour length of 111 +- 2 nm. In fig. 6a, the squares corresponding to the different unfolded segments of the titinkinase are located left downwards on the diagonal line. Again, small sub-steps are combined for clarity. Since these squares are aligned along the diagonal with positive slope, one can conclude that the enzyme chose the same unfolding pathway in both traces. The cross-superposition of Fig. 6 b) shows the same increments between the titinkinase folding barriers. However, the squares aligned along the diagonal with negative slope, indicate that their order is switched. Although this is a rare case, it shows that these two unfolding events do not completely depend on each other and that different unfolding pathways exit. The combination of these two states to a larger square shows the same sequence as in a). Since this is the case in all traces, one can conclude that the last energy barrier, at the end of the square in the upper right corner of the histogram, strongly depends on the proceeding ones. Thus, in this embodiment unfolding pathways can be determined and visualized by means of the cross-superposition of folding barrier histograms.

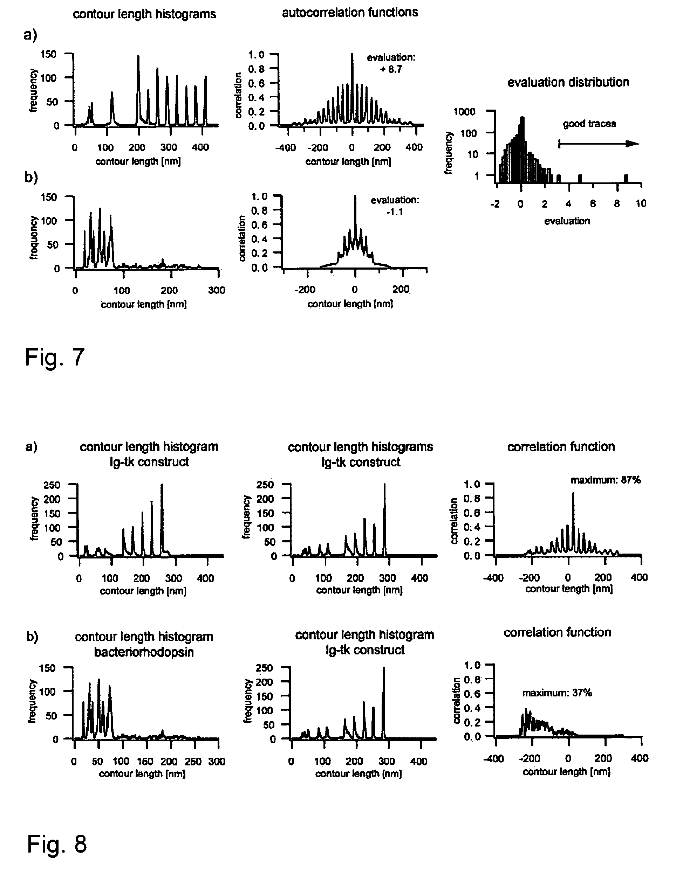

In some embodiments, single molecule force spectroscopy measurements discriminate between impurities or non-specific interactions and select only those traces, which exclusively stem from the molecule under investigation. However, on the one hand, the concentration of the adsorbed molecules has to be low enough in order to observe individuals. Therefore, not every approach of the cantilever with the surface results in a contact with the molecule of interest. Especially in the case where the molecules are unspecific attached to the surface and to the tip of the probe, the rate of yield can be in the 1/1000 range. On the other hand, force extension traces showing adsorption of other molecules, e.g. from impurities, have to be filtered out. The use of protein constructs, fusion proteins and protein polymers makes the selection easier, since their regular unfolding pattern results in better contrast. However, the automatic detection of these patterns is difficult in some embodiments, because both, the extension and the force of an unfolding pattern, differs from trace to trace due to fluctuations. Even more impact have instrument drift, variances of experimental parameters like the pulling speed, the temperature, properties of the solution or changes that result in a different bond strength. This is not the case in embodiments, where, for example, the force extension traces are transformed into the contour length space with the transformation method(s) introduced above. Since the contour length is a molecular coordinate that is independent of the force, but only reflects the folding state of the molecule, the histograms of different traces can be directly compared in such embodiments, even if experimental parameters are altered. In some embodiments, a force spectroscopy data analysis software is used that includes a pattern recognition algorithm based on contour length histograms. In some embodiments, the implemented models for polymer elasticity, with which the transformation is carried out, are, for example, the WLC-model, the QM-WLC, the two-state FJC and the FRC model, as mentioned above. In some embodiments, it can be used to identify and filter traces showing a particular pattern. In these traces, folding barriers are automatically detected and the relevant parameters of peaks like contour length, rupture force and loading rate can be determined and stored, for example in a memory, storage or database. In some embodiments, it can also be used to screen traces of a certain kind of molecule in a multi component sample. The performance of this method is shown, by applying it to a dataset of 1000 force extension traces of the Ig-GFP construct. In this embodiment, the regular pattern caused by Ig-domain unfolding is detected by means of the autocorrelation function of the barrier position histogram (s. Fig. 7a). In this embodiment, to each trace a value is attributed that considers the level of the autocorrelation function at a certain contour length, as well as the sharpness of a possible peak at this position. In order to prefer traces showing several Ig-domains, the same is done for twice the contour length. In this embodiment, 29 nm for this parameter is chosen, however it can be adjusted to every regular pattern. The trace shown in fig. 7a exhibits seven contour length increments of about 29 nm and high and sharp peaks in its autocorrelation. It gets evaluated with +8.7, when the following formula is used:

Contour length histograms which exhibit several peaks with even spacing $l_{max}$ should be filtered out. First, the evaluation algorithm finds the maximum in the autocorrelation function a(l) in the interval $[l_{max} - w/2, l_{max} + w/2]$ with width w. Second, the relative height of the maximum is determined by averaging on both sides of the maximum $l_{max}$ in the interval $[l_{max} - 3/2w, l_{max} - 1/2w]$ and $[l_{max} + 1/2w, l_{max} + 3/2w]$, respectively:

$$<a>_{\text{left}} = \int_{l\max-3/2w}^{l\max-1/2w} a(l)dl \, , \; <a>_{\text{right}} = \int_{l\max+1/2w}^{l\max+3/2w} a(l)dl$$

The evaluation value v is obtained by the following equation:

$$v = 5 \cdot \left( \left| a(l\max) - <a>_{\text{left}} + a(l\max) - <a>_{\text{right}} \right| - \left| <a>_{\text{left}} - <a>_{\text{right}} \right| \right)$$

This procedure is done for l and 2l and the obtained values are added.

In contrast to this, the trace in fig. 7 b) showing the unfolding of bacteriorhodopsin of another embodiment, does not exhibit increments of 29 nm and has therefore low autocorrelation at this value. It is evaluated with -1.1. In this way, traces with special properties are identified in some embodiments. An embodiment, wherein a dataset of 1000 Ig-GFP traces is used, results in the evaluation distribution shown on the right side of fig 7. Most of the traces are evaluated worse than 3 and do not exhibit enough Ig-domains in order to be reliable. The trace with the best value of 8.7 is the one of fig. 7a). Thus, by using the evaluation value, it is possible to sort out easily force traces which are not wanted, since they have, e.g. a low quality or they show a pattern, which is not subject of interest.

Besides this very useful application in some embodiments, the transformation of force extension traces into barrier position histograms also allows for the comparison of different traces in some embodiments. By calculating the correlation function of two histograms which represent a first and a second transformed force trace data set, the maximum degree of correlation can be determined in some embodiments. If the two traces correspond to the same molecule, their contour length histograms exhibit a similar pattern, which results in a high degree of correlation. This is shown in fig. 8 a) by means of an embodiment using two Ig-tk traces. Their maximum degree of correlation amounts 87%. In the other case that two traces correspond to different molecules, the correlation is expected to be lower, as it is demonstrated in fig 8 b). The maximum degree of correlation between the histogram of bacteriorhodopsin and of the Ig-tk construct equals 37%. In this manner, a set of data containing different types of traces can be classified in some embodiments. In some embodiments, even a sample with unknown composition with respect to a known molecular unfolding pattern may be screened, and, thus the composition of the sample can be classified.

In the following, embodiments which also have been described above, will be describe now more schematically. Any features described above, may also be incorporated in and applied to the following embodiments.

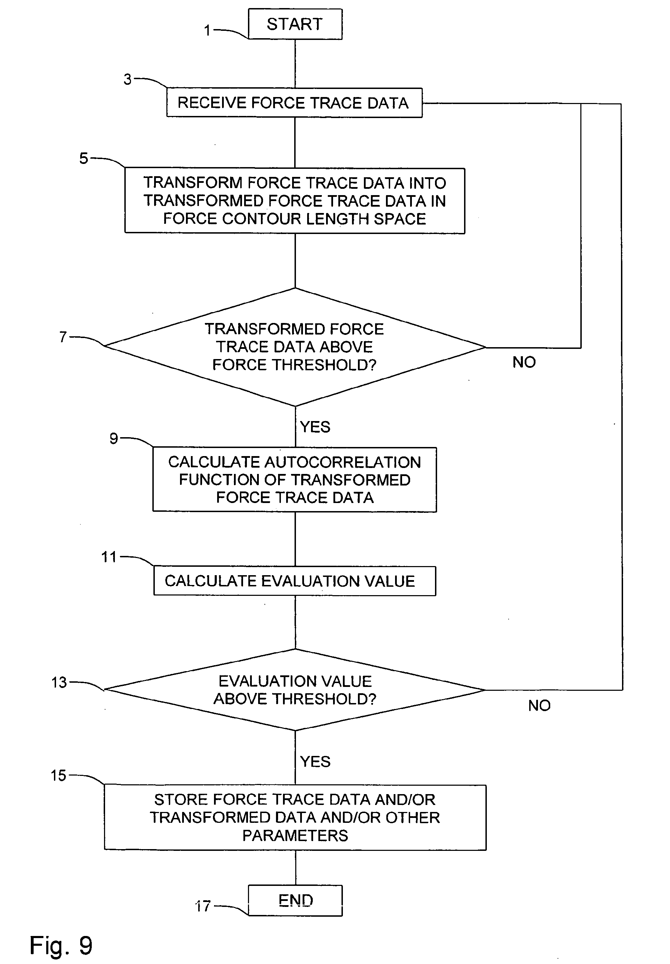

Fig. 9 shows an exemplary flow diagram of an embodiment for analyzing force trace data. At 1 the method starts and at 3 force trace data are received. The force trace data may result from a measurement of a sample with, for example, an AFM, as already explained above. Thus, the force trace data may represent a measurement of one force extension trace corresponding usually to one molecule of the sample. However, the force trace data may also represent only parts of a force trace measurements or more than one force trace measurement. At 5, the received force trace data are transformed from the force extension space into the force contour length space, as discussed in detail above. At this point in some embodiments the process ends and may be restarted with receiving next force trace data. Here, the transformed force trace data or, more precisely, a force component of the force trace data should be above a force threshold at 7, otherwise the process goes back to 3. The force threshold has a value which corresponds substantially to a noise level generated by a cantilever of an AFM, for example. When the threshold data is not above the force threshold, it is rejected since it is regarded as noise without any useful information. Is the force trace data above the threshold, an autocorrelation function of the transformed force trace data is calculated. As shown above, it is possible to detect a pattern in the transformed force trace data by calculating an autocorrelation function. For example, different contour length positions having a similar distance may be detected. In such cases where contour length positions have a similar distance, this would be an indication for a regular unfolding of a molecule or biomolecule. At 11 an evaluation value, as explained above, is calculated and compared with a threshold value at 13. Force traces having an evaluation value below the threshold value are rejected, and the process goes back to 3. As shown above, the evaluation value is an indicator, whether the force trace comprises useful or wanted information or not. If the evaluation value is above the threshold, the force trace data and/or the transformed force trace data and/or other parameters or data which are associated with the force trace may be stored and the process ends at 17 (or may go back to 3 to receive the next force trace data). In this way only force trace data may be stored, which contain useful information with a high probability. Thus, storage place and computation time are saved and the automatic selection of force traces and the corresponding force trace data becomes possible. Additionally, since only force traces fulfilling predefined conditions are stored, also very complex samples may be investigated. Additionally, in some embodiments, the evaluation value may also be used to influence the measure process of force traces. For example, the evaluation value may be used to adjust measure parameters, such as the lateral position of the probe of an AFM, the temperature, e.g. of the sample, the position of the sample, or any other measure and/or experimental parameter influencing force extension traces. However, in some embodiments there is no need for checking, whether the force trace data or the transformed force trace data or the evaluation value or above or below a specific threshold value. Thus, in some embodiments some are all of these checks may be omitted.

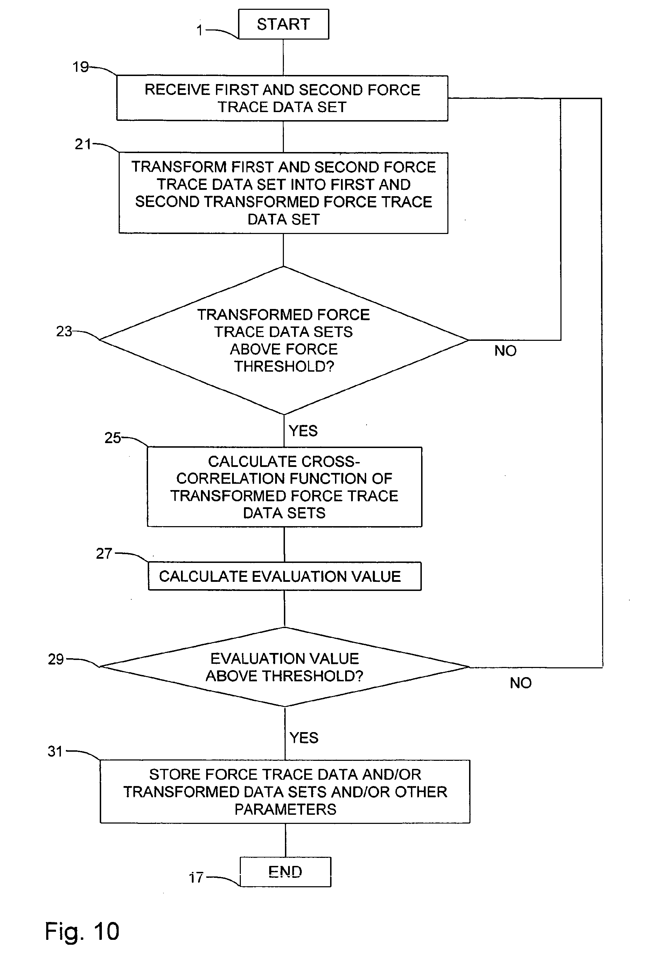

Fig. 10 shows an exemplary flow diagram of an embodiment similar to the embodiment of fig. 9, but wherein two force trace data sets are compared. At 19 a first and a second force trace data set are received. A force trace data set includes data representing at least one measured force trace. Thus, both the first and second force trace data sets represent each at least one force trace. The first as well as the second force trace data sets are respectively transformed into a first and second transformed force trace data set at 21, based on a transformation as explained above. The transformed force trace data sets should be above a force threshold at 23 (similar to embodiment of fig. 9), otherwise they are rejected and the process goes back to 19. Of course, this check is only facultative and may be omitted in some embodiments. At 25 a crosscorrelation function is calculated of the first and second transformed force trace data set. An example of such a correlation function is also shown in figs. 8a and 8b on the right hand side. Thus, the crosscorrelation function shows how good patterns represented by the first and second transformed force trace data correspond to each other. Additionally, an evaluation value may be calculated at 27, as also mentioned above. At 29, the evaluation value can be taken again as criteria to sort out force traces, which are unwantend and/or do not contain any useful information. When the evaluation value is above a certain threshold value, the force trace data sets and/or the transformed force trace data sets and/or other parameters or data which have been calculated during the process or which are associated with the corresponding force traces may be stored at 31. In some embodiments, already transformed force trace data sets are received, for example and thus, the process may start at 23 or 25. In some embodiments, the first and/or second force trace data sets and/or the first and/or second transformed force trace data sets may have different sources. For example, the first (transformed) force trace data set may be received from an actual AFM measurement, while the second (transformed) force trace data set may be received from another source - for example from a previous AFM measurement or from a theoretical prediction or simulated data. Thus, it is also possible to compare patterns of measured (transformed) force traces with patterns of a theoretical model.

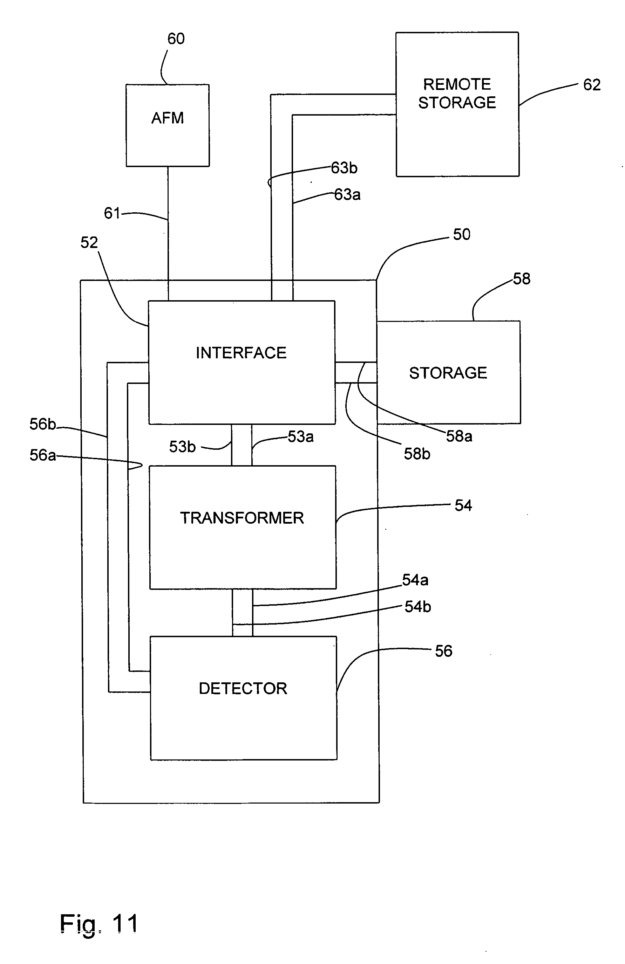

Fig. 11 illustrates exemplary an embodiment of an analyzing apparatus 50 including an interface section 52, a transformer section 54, a detector section 56 and storage 58. The interface 52 is coupled via line 61 to an AFM 60 for receiving force trace data, which are measured with the AFM (in some embodiments the AFM includes the analyzing apparatus 50). Additionally, the interface 52 is coupled to storage 58 and remote storage 62, which also may contain force trace data. The storage 58 and the remote storage is a device being adapted to temporarily or continuously store data, such as RAM, ROM, floppy disc, hard disk, compact disk, or any other magnetic, optic or magneto-optic storage. The transformer 54 is coupled via data in line 53a und data out line 53b to the interface 52. Thus, transformer 54 receives force trace data from interface 52, transforms the force trace data into transformed force trace data with a transformation as explained above and gives out the transformed force trace data via line 54a coupled to detector 56. Detector 56 receives the transformed force trace data and analysis it, i.e. detects pattern(s) in the transformed force trace data, such as contour length peaks. Such pattern recognition may comprise, as also explained in detail above, the calculation of auto- and/or crosscorrelation functions, an evaluation value, a fit with a Gaussian, etc. The detector 56 is also directly coupled to interface 52, since it is also possible that already transformed force trace data may be received, e.g. from storage 58 or remote storage 62. In some embodiments, the detector 56 is omitted and the analyzing apparatus may give transformed force trace data out over interface 52. The storage 58 and the remote storage 58 may store force trace data, transformed force trace data, parameters, such as parameters of fit models, such as the WLC-model, etc., contour length parameters, etc. The stored parameters may characterize a molecule or a biomolecule like a fingerprint. Thus, the parameters of a type of molecule or type of biomolecule may be stored in a database in the storage 58 or the remote storage 62. The apparatus 50 is capable to communicate with such a database stored in storage 58 or remote storage 62 via interface 62. The communication with the remote storage 62 may happen, for example, over internet using the TCP/IP protocol. The link between apparatus 50 and remote storage 62 and storage 58 as well as between AFM and apparatus 50 may be hardwired or wireless in some embodiments. Thus, apparatus 50 may store detected patterns or any other parameters associated with the received force trace data in storage 58 and remote storage 62 and also in a corresponding database which is stored in storage 58 and/or remote storage 62. In this way, it is possible not only to detect patterns in the force trace data, but also to compare the detected patterns or other parameters being characteristic for a molecule with stored patterns or parameters in the database. Thus, it is possible to determine automatically molecules being represented by the force trace data. Additionally, it is possible to send the detected patterns and the associated force trace data, transformed force trace data, etc., to the database in storage 58 or remote storage 62 for storing and classifying. In this way it is possible to automatically build up a database with different types of molecules and the corresponding data which characterize each type of molecule like a fingerprint.

In some embodiments, an automatic analyzing system is used which is able to perform the above described method(s) and comprises, for example, the above described apparatus 50. Such an analyzing system may also comprise an AFM which is able to automatically measure force extension traces by measuring a sample. Thus, the analyzing system would be fully automatic: the AFM collects automatically force trace data, which are analyzed by the analyzing apparatus, and thus the force trace data can be sorted out and classified and the results can automatically be stored in the storage and in a database. Thus, the complete automatic investigation of a sample containing different types of molecules and determination thereof becomes possible.

The above-described embodiments and parts thereof can be combined with each other and have not to be understood as being only separate. All features of the embodiments may also be combined with each other. Additionally, also the features of the described methods may be implemented in an apparatus or system and vice versa. All described mathematical models herein have to be understood as being exemplary only. Any other mathematical models being appropriate may also be used.


**Claims**

1. A method of analyzing force trace data, comprising:

    - receiving force trace data, obtained by measuring a sample with a force spectroscopy apparatus, the force trace data having a first and second data component, the first data component representing an extension of a sample of the force spectroscopy apparatus, and the second data component representing a force acting on the sample and causing the extension; and
    - transforming the force trace data into transformed force trace data, comprising a first and second transformed force trace data components, wherein at least one of the first and second transformed force trace data components represents a characteristic of the sample, being independently from at least one of thermal fluctuations, spacer length, bonding strength, the statistic nature of bond ruptures and experimental parameters regarding the measurement of the sample with the force spectroscopy apparatus.

2. The method of claim 1, wherein the experimental parameters regarding the measurement of the sample include at least one of temperature, pulling speed and properties of the solvent.

3. The method of claim 1, wherein the first or second transformed force trace data component represents a contour length of a molecule of the sample.

4. The method of claim 3, wherein the transformation is a one-to-one mapping of the force trace data being in the force-extension space into the transformed force trace data being in the force-contour length-space.

5. The method of claim 4, wherein the sample comprises polymers and the transformation is based on at least one model using polymer elasticity.

6. The method of claim 5, wherein the transformation is based on at least one of worm like chain modei, freely jointed chain model, and freely rotating chain model.

7. The method of any one of claims 1 to 6, wherein the force trace data are rejected, based on a property of the transformed force trace data.

8. The method of claim 7, wherein the force trace data are rejected, based on determining, whether the first and/or second component of the force trace data exceeds a threshold value.

9. A method of analyzing force trace data, comprising:

    - receiving a first and second transformed force trace data sets, including transformed force trace data being transformed according to any one of claims 1 to 8;
    - detecting a characteristic property in the transformed force trace data by comparing the first and second transformed force trace data sets.

10. The method of claim 9, wherein the characteristic property comprises a pattern in the transformed force trace data.

11. The method of claim 9 or 10, wherein the first and second transformed force trace data set is the same and the detection of a characteristic property comprises calculating an autocorrelation function of the first transformed force trace data set.

12. The method of claim 9 or 10, wherein the detection of an agreement of a characteristic property or pattern comprises calculating a cross correlation between the first and the second transformed force trace data set or a default pattern.

**13.** The method of any one of claims 9 to 12, further comprising calculating an evaluation factor representing the quality of agreement between a detected and a default characteristic property or pattern.

**14.** An apparatus for analyzing force trace data, obtained from measuring a sample with a force spectroscopy apparatus, comprising:

- an interface section (52) being adapted to receive force trace data having a first and second data component, the first data component representing an extension of a sample of the force spectroscopy apparatus, and the second data component representing a force acting on the sample and causing the extension; and
- a transformer section (54), coupled to the interface section (52), being adapted to transform the received force trace data into transformed force trace data, comprising a first and second transformed force trace data components, wherein at least one of the first and second transformed force trace data components represents a characteristic of the sample, being independently from at least one of thermal fluctuations, spacer length, bonding strength, the statistic nature of bond ruptures and experimental parameters regarding the measurement of the sample with the force spectroscopy apparatus.

**15.** The method of claim 14, wherein the experimental parameters regarding the measurement of the sample include at least one of temperature, pulling speed and properties of the solvent.

**16.** The analyzing apparatus of claim 14 or 15, wherein the first or second transformed force trace data component represents a contour length of a molecule of the sample.

**17.** The analyzing apparatus of any one of claims 16, wherein the transformer section (54) is adapted to perform a transformation, which is a one-to-one mapping of the force trace data being in the force-extension space into the transformed force trace data being in the force-contour length-space.

**18.** The analyzing apparatus of claim 17, wherein the transformer section (54) is adapted to perform a transformation, based on at least one model using polymer elasticity.

**19.** The analyzing apparatus of claim 18, wherein the transformer section (54) is adapted to perform a transformation based on at least one of worm like chain model, freely jointed chain model, and freely rotating chain model.

**20.** The analyzing apparatus of any one of claims 14 to 19, further comprising a detector section (56) being adapted to detect a characteristic property in the transformed force trace data by comparing a first and a second transformed force trace data set.

**21.** The analyzing apparatus of claim 20, wherein the characteristic property comprises a pattern in the transformed force trace data and the detector section (56) is adapted to detect the pattern.

**22.** The analyzing apparatus of claims 20 or 21, wherein the detector section (54) is adapted to calculate an autocorrelation and/or cross correlation function of the first and/or second transformed force trace data set.

**23.** The analyzing apparatus of claim 22, wherein the apparatus is coupled to a storage (58, 62) including a database, which includes a set of default patterns representing sample characteristics.

**24.** The analyzing apparatus of claim 23, including the storage (58).

**25.** The analyzing apparatus of claim 23, wherein the storage (62) is remote and the interface section (52) is adapted to connect the remote storage including a database, which includes a set of default patterns representing sample characteristics.

**26.** The analyzing apparatus of any one of claims 23 to 25, wherein a detected characteristic property or pattern is sent to the storage for storage in the database.

**27.** The analyzing apparatus of any one of claims 23 to 26, wherein the detected characteristic property or pattern is compared with default characteristic property or patterns stored in the database.

**28.** The analyzing apparatus of any one of claims 20 to 27, wherein the detector section (56) is adapted to calculate an evaluation value representing the quality of agreement between a detected characteristic property or pattern and a default characteristic property or pattern.

29. A force spectroscopy apparatus comprising an analyzing apparatus according to any one of claims 14 to 28.

30. The force spectroscopy apparatus of claim 29, comprising at least one of atomic force microscope, glass-needles and optical or magnetic tweezers.

31. The force spectroscopy apparatus of claim 29 or 30, comprising a controller being adapted to control parameters of the measurement of a sample, and wherein the controller controls the measurement of the sample based on the evaluation value.

32. The force spectroscopy apparatus of claim 31, wherein the parameters of the measurement of a sample comprising at least one of pulling speed, temperature, properties of the solvent and lateral sample position.

33. Analyzing system, comprising:

   - a force spectroscopy apparatus;
   - an analyzing apparatus according to any one of claims 14 to 28;
   - a storage including a database; and
   - a network connecting the force spectroscopy apparatus, the analyzing apparatus and the storage; wherein

   the force spectroscopy apparatus is adapted to automatically measure a sample and to send resulting force trace data to the analyzing apparatus;
   the analyzing apparatus is adapted to detect a characteristic property in the transformed force trace data and to compare the detected characteristic property with characteristic properties stored in the database to automatically determine the type of the measured sample.

34. The analyzing system of claim 33, wherein the force spectroscopy apparatus comprises at least one of atomic force microscope, glass-needles and optical or magnetic tweezers.

35. A computer program comprising instructions causing a processor based system to perform the method according to any of claims 1 to 13.

Fig. 1a

Fig. 1b

Fig. 1c

Fig. 1d

**raw data:**
**force extension trace**

Fig. 2a

**transformed data:**
**force contour length trace**

Fig. 2b

**contour length histogram**

Fig. 2c

- - - WLC          ·········· QM-WLC          —— FRC

Fig. 3

Fig. 4a

Fig. 4b

Fig. 4c

Fig. 5

Fig. 6

Fig. 7

Fig. 8

Fig. 9

START

RECEIVE FIRST AND SECOND FORCE TRACE DATA SET

TRANSFORM FIRST AND SECOND FORCE TRACE DATA SET INTO FIRST AND SECOND TRANSFORMED FORCE TRACE DATA SET

TRANSFORMED FORCE TRACE DATA SETS ABOVE FORCE THRESHOLD?

NO

YES

CALCULATE CROSS-CORRELATION FUNCTION OF TRANSFORMED FORCE TRACE DATA SETS

CALCULATE EVALUATION VALUE

EVALUATION VALUE ABOVE THRESHOLD?

NO

YES

STORE FORCE TRACE DATA AND/OR TRANSFORMED DATA SETS AND/OR OTHER PARAMETERS

END

Fig. 10

Fig. 11

European Patent
Office

**EUROPEAN SEARCH REPORT**

Application Number

EP 07 02 0819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARSICO ANNALISA ET AL: "A novel pattern recognition algorithm to classify membrane protein unfolding pathways with high-throughput single-molecule force spectroscopy" BIOINFORMATICS (OXFORD), vol. 23, no. 2, January 2007 (2007-01), pages E231-E236, XP002463126 ISSN: 1367-4803 * figures 1-6 * * paragraphs [02.2] - [02.6], [03.1] - [03.3], [0004] * | 1-35 | INV.<br>G01N13/16<br>G12B21/20<br>G01N33/53 |
| X | KUHN M ET AL: "Automated alignment and pattern recognition of single-molecule force spectroscopy data" JOURNAL OF MICROSCOPY BLACKWELL SCIENCE UK, vol. 218, May 2005 (2005-05), pages 125-132, XP002463127 ISSN: 0022-2720 * figures 1-4 * * paragraphs [INTRODUCTION], [METHODS], [RESULTS] * | 1-35 | |
| A | BEST ROBERT B ET AL: "Force mode atomic force microscopy as a tool for protein folding studies." ANALYTICA CHIMICA ACTA, vol. 479, no. 1, 5 March 2003 (2003-03-05), pages 87-105, XP002463128 ISSN: 0003-2670 * figures 1,3-5,7 * * paragraphs [0003] - [0005], [0008] * | 1-35 | TECHNICAL FIELDS SEARCHED (IPC)<br><br>G12B<br>C07K<br>G01N<br>G01B |

-/--

The present search report has been drawn up for all claims

| Place of search | Date of completion of the search | Examiner |
|---|---|---|
| Berlin | 20 December 2007 | Polesello, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

## EUROPEAN SEARCH REPORT

Application Number

EP 07 02 0819

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | THORMANN ET AL: "Dynamic force spectroscopy on soft molecular systems: Improved analysis of unbinding spectra with varying linker compliance" COLLOIDS AND SURFACES. B, BIOINTERFACES, ELSEVIER, AMSTERDAM,, NL, vol. 53, no. 2, 24 November 2006 (2006-11-24), pages 149-156, XP005779257 ISSN: 0927-7765 * figures 2-8 * * paragraphs [0002] - [0004] * ----- | 1-35 | |
| A | KELLERMAYER M S Z ET AL: "Folding-unfolding transitions in single titin molecules characterized with laser tweezers" SCIENCE, AMERICAN ASSOCIATION FOR THE ADVANCEMENT OF SCIENCE,, US, vol. 276, 16 May 1997 (1997-05-16), pages 1112-1116, XP002118923 ISSN: 0036-8075 * the whole document * ----- | 1-35 | TECHNICAL FIELDS SEARCHED (IPC) |

The present search report has been drawn up for all claims

| Place of search | Date of completion of the search | Examiner |
|---|---|---|
| Berlin | 20 December 2007 | Polesello, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BUSTAMANTE, C. ; J.F. MARKO ; E.D. SIGGIA ; S. SMITH.** Entropic elasticity of lambda-phage DNA. *Science,* 1994, vol. 265 (5178), 1599-1600

- **LIVADAR, L. ; R.R. NETZ ; H.J. KREUZER.** Stretching Response of Discrete Semiflexible Polymers. *Macromolecules,* 2003, vol. 36 (10), 3732-3714